# EUROPÄISCHE PATENTANMELDUNG

(11) **EP 0 527 401 A2**
(43) Veröffentlichungstag der Anmeldung: **17.02.1993**
(21) Anmeldenummer: 92113084.5
(22) Anmeldetag: 31.07.1992
(51) Int. Cl.: G21F 9/12, C09K 21/12, C09K 21/04

(54) **Brandschutzgele, Verfahren zu deren Herstellung und deren Verwendung, insbesondere für Brandschutzverglasungen**

(30) Priorität: 13.08.1991 DE 4126702
(60) Teilanmeldung: 94108572.2
(71) Anmelder: BAYER AG, 51368 Leverkusen (DE)
(72) Erfinder: von Bonin, Wulf, Dr., W-5068 Odenthal (DE); von Gizycki, Ulrich, Dr., W-5090 Leverkusen 3 (DE)

(57) **Zusammenfassung**

Brandschutzgele auf der Basis von Aminsalzen saurer Phosphate sind dadurch gekennzeichnet, daß sie eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden und beim Erhitzen auf Temperaturen über 45°C in weniger als 24 Stunden in ein durchsichtiges Gel übergehen. Neben anderen Anwendungen sind solche Brandschutzgele insbesondere zur Herstellung von Verbundglaskonstruktionen mit Brandschutzwirkung geeignet.

## Beschreibung

Die vorliegende Erfindung bezieht sich auf Brandschutzgele auf der Basis von Aminsalzen saurer Phosphate, deren Herstellung und deren Verwendung.

Die Verwendung von zumeist Wasser enthaltenden Gelen als Zwischenschichten in Verbundglaskonstruktionen ist bekannt. Im allgemeinen werden dabei Alkalisilikatgele verwendet oder Gele auf der Basis organischer Polymerisate. Erstere haben den Nachteil, daß sie im Brandfall aufgrund des Alkaligehaltes bei hohen Temperaturen das Durchschmelzen oder das Wegfließen des Glases begünstigen, letztere haben den Nachteil, daß sie nach Abdampfen des Wassers verbrennen und das Glas ungeschützt zurücklassen.

Intumeszenzträger, auch solche in fester Form, die Ammonium- und/oder Aminsalze von sauren Phosphaten von Metallen der 2. und/oder 3. Gruppe des Periodensystems der Elemente enthalten, sind Gegenstand einer eigenen älteren Patentanmeldung. Demgegenüber wurden jetzt Brandschutzgele und Brandschutzgel-Vorstufen gefunden, die bei ungefähr Raumtemperatur relativ niedrig viskos, d.h. fließfähig, sind und bei höherer Temperatur durchsichtige Gele bilden.

Erfindungsgemäße Brandschutzgele auf der Basis von Aminsalzen saurer Phosphate sind dadurch gekennzeichnet, daß sie eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden, die beim Erhitzen auf Temperaturen über 45°C in weniger als 24 Stunden in ein durchsichtiges Gel übergeht.

Eine bevorzugte Aluminiumkomponente ist Aluminiumhydroxid, eine bevorzugte Phosphorkomponente ist ortho-Phosphorsäure und bevorzugte Aminkomponenten sind Anlagerungsprodukte von Epoxiden an Ammoniak, primäre und/oder sekundäre Mono- und/oder Polyamine, z.B. Ethanolamin.

Das erfindungsgemäße Verfahren zur Herstellung von Brandschutzgelen auf der Basis von Aminsalzen saurer Phosphate ist dadurch gekennzeichnet, daß man aus einer Aluminiumverbindung und ortho-Phosphorsäure ein saures Aluminiumphosphat herstellt und dieses in 20 bis 85 gew.-%iger wäßriger Lösung mit einem Aminoalkohol umsetzt, wobei folgende Mengenverhältnisse eingehalten werden
- pro Mol Aluminiumverbindung 2 bis 4 Mol ortho-Phosporsäure und
- pro 100 Gramm saures Aluminiumphosphat in 20 bis 85 gew.-%iger wäßriger Lösung 0,5 bis 1,5 Mole Aminoalkohol.

Vorzugsweise werden pro Mol Aluminiumverbindung 2,5 bis 3 Mol ortho-Phosphorsäure eingesetzt und pro 100 Gramm saures Aluminiumphosphat 0,9 bis 1,3 Mol Aminoalkohol.

Wenn man beispielsweise von einer 20 gew.-%igen wäßrigen Lösung eines Aluminium-tris-phosphates ausgeht, kann man beispielsweise pro 100 Gew.-Teile Phosphat-Feststoff 45 bis 65 Gew.-Teile, vorzugsweise 50 bis 60 Gew.-Teile Ethanolamin einsetzen. Wenn man beispielsweise von einer 80 gew.-%igen wäßrigen Lösung eines Aluminium-tris-phosphates ausgeht, kann man beispielsweise 30 bis 70 Gew.-Teile, vorzugsweise 45 bis 65 Gew.-Teile Ethanolamin pro 100 Gew.-Teile Phosphat-Feststoff einsetzen. Bei anderen Konzentrationen an Aluminium-tris-phosphat-Lösungen beispielsweise und vorzugsweise einzusetzende Ethanolamin-Mengen lassen sich durch lineare Interpolation zwischen den obengenannten Eckdaten ermitteln.

Als Aminoalkohol-Komponente für erfindungsgemäß herzustellende Brandschutzgele kommen vor allem Anlagerungsprodukte von Epoxiden, vorzugsweise von Ethylenoxid und/oder Propylenoxid an Ammoniak, primäre und/oder sekundäre, aliphatische, aromatische und/oder araliphatische Mono- und/oder Polyamine in Frage. Bevorzugt sind solche Anlagerungsprodukte an Mono- und/oder Dialkylamine mit 1 bis 24 C-Atomen pro Alkylrest, beispielsweise Anlagerungsprodukte von Ethylenoxid und/oder Propylenoxid an Methylamin, Ethylamin, Propylamin, Butylamin, Oleylamin, Anilin und Polyalkylen-Polyamin, beispielsweise Polyethylen-Polyamin. Besonders bevorzugt sind Ethanolamine, insbesondere Mono-Ethanolamin.

Das erfindungsgemäße Verfahren liefert Brandschutzgele, die bei 5 bis 30°C mehr als 24 Stunden fließfähig sind und bei Erhitzung auf Temperaturen über 45°C in weniger als 24 Stunden in eine klar durchsichtige, hochviskose, i.a. nicht mehr fließfähige, gelierte Form übergehen.

Erfindungsgemäße Brandschutzgele können zu Zwecken des vorbeugenden Brandschutzes verwendet werden.

Beispielsweise kann man erfindungsgemäße Brandschutzgele als Zwischenschichten in Verbundglaskonstruktionen mit Brandschutzwirkung einsetzen. Geeignet sind sie auch als Tränkmittel und/oder Imprägnierung für harte und flexible Schaumstoffe oder textile Gebilde, als Füllung für Abdichtungsvorrichtungen (z.B. für Abdichtungsschläuche und Abdichtungs-Textilbänder), als Kabelfüllung und zur Herstellung von Brandschutzkitten, wobei fallweise auch eine Intumeszenzwirkung bei Beflammung zum Tragen kommen kann. Auch für die Beschichtung von Flächengebilden, z.B. Tapeten, Holz, Pappen, Textilien, Kunststoffen, Metallen und/oder Mauerwerk, als Hohlraumfüllung, als Mörtel oder Mörtelzusatz, als Komponente in textilen, Brandschutz vermittelnden Bandagen oder als brandwidrige Klebemasse sind die erfindungsgemäßen Brandschutzgele verwendbar.

Vor der Gelierung können den erfindungsgemäßen Produkten gegebenenfalls weitere Stoffe zugesetzt werden. Beispielsweise kommen hierfür in Betracht: Füllstoffe, z.B. in Form von Pulvern, Flakes, (Hohl)Perlen oder Granulaten, bei denen es sich beispielsweise handeln kann um Gläser, Graphite, geblähte und/oder blähfähige Graphite, Kohlenstoffpartikel, Kohlenstoff-Fasern, Mineralfasern, Glimmer, sonstige Silikate, Titandioxid, Perlite, Vermikulite, Asbeste, Kieselsäuren, Quarze, Alumosilikate und/oder Borsilikate. Es kommen auch Farbgeber, Lichtschutzmittel, Radikalfänger, Substanzen mit speziellen Absorptionseigenschaften zur Erzielung von Filter- oder Verdunkelungseffekten im elektromagnetischen Spektrum, Metallpulver, Metallfasern oder Metallflakes, Cellulose, Stärke, Zucker, Polyole, Photochromiebildner, Nukleierungsmittel (zur Initiierung und Vergleichmäßigung des Aufschäumens im Beflammungsfalle), Biocide und/oder Geruchsstoffe in Frage. Solche weiteren Stoffe können in erfindungsgemäßen Brandschutzgelen, beispielsweise insgesamt in Mengen von 0 bis 60 Gew.-%, vorhanden sein.

Weiterhin kann das erfindungsgemäße Gel zur mechanischen Verstärkung gegebenenfalls beispielsweise Vliese, Netze, Gitter, Drähte, Fasern und/oder Faserstränge aus den verschiedensten Materialien enthalten.

Noch nicht vollständig gelierte erfindungsgemäße Produkte können auch z.B. (partiell) getrocknet und in Form von zähen Beschichtungen, plastisch verarbeitbaren Massen oder freitragenden Folien bestimmungsgemäß eingesetzt werden. Hierbei sind thermoplastische Verarbeitungsverfahren bis zu 150°C und mehr, z.B. Kalandrieren, Spritzguß, Extrusion und/oder Verpressung, anwendbar.

Besonders bevorzugt werden erfindungsgemäße Brandschutzgele zur Herstellung von Zwischenschichten in ein- oder mehrlagigen Glasverbundkonstruktionen verwendet, wobei man so verfahren kann, daß man das Brandschutzgel vor der Gelierung in fließfähiger Form zwischen Glasplatten bringt und dann durch eine Temperung bei über 45°C zur Gelierung bringt. Man kann auch so verfahren, daß man das Brandschutzgel vor der Gelierung zur Beschichtung von Glasplatten verwendet und vor oder nach der Gelierung die gegebenenfalls mit einer Konzentrationserhöhung durch Trocknen verbunden sein kann, zu einem ein- oder mehrlagigen Glasplattenverbund zusammenfügt.

Ein weiterer Weg zur Herstellung eines Glasplattenverbunds besteht darin, daß man die Umsetzungsprodukte aus Aluminiumphosphat und Aminoalkohol weitgehend oder vollständig wasserfrei macht, nach thermoplastischen Verarbeitungsverfahren gegebenenfalls unter Mitverwendung von Trägerfolien in Folienform überführt, so auf die Glasplatten aufbringt und diese dann zu einer Verbundkonstruktion zusammenfügt.

Bei dem Glas zur Herstellung von solchen Verbundglaskonstruktionen kann es sich z.B. um Glasscheiben aus Floatglas, Fensterglas, drahtverstärktem Glas, feuerfestem Glas, Quarzglas, Kunststoffglas und/oder Glaskeramik handeln.

Eine andere Verwendung erfindungsgemäßer Brandschutzgele besteht darin, daß man sie zur Beschichtung, Imprägnierung, Verklebung, Ausfüllung und/oder Bindung von Substraten im Bau- und Konstruktionsbereich einsetzt.

Glasverbundmaterialien, die erfindungsgemäße Brandschutzgele enthalten, können z.B. den Aufbau Glas/Gelschicht/Glas/Gelschicht/Glas aufweisen, also ein 3-Scheibenverbund sein. Gegebenenfalls kann es sich auch um einen 4-Scheibenverbund handeln. Die Dicke und der Materialcharakter der verschiedenen Gläser und/oder Gelschichten kann variiert werden, die Dicke z.B. zwischen 0,05 und 25, vorzugsweise zwischen 0,1 und 10 mm. Der Gelcharakter der erfindungsgemäßen Zwischenschichten ist schon allein deswegen vorteilhaft, weil die Verbundglaskonstruktion bei Beschädigung nicht auslaufen kann. Die erfindungsgemäßen Zwischenschichten sind durch ihren ausgesprochenen Gelcharakter nicht mehr fließfähig.

Die erfindungsgemäßen Zwischenschichten sind insbesondere dann nicht mehr fließfähig und haben einen besonders ausgeprägten Gelcharakter, wenn bei Mengenverhältnissen gearbeitet worden ist, die innerhalb der oben angegebenen Vorzugsbereiche der Einsatzmengen von Aluminiumphosphat und Aminoalkohol liegen.

Der Wassergehalt der erfindungsgemäßen Zwischenschichtmaterialien, die natürlich auch für andere Einsatzzwecke in Betracht kommen, kann frei gewählt werden und kann sich nach den konstruktiven Gegebenheiten des Einsatzgebietes und den zu erwartenden thermischen Belastungen richten. Beispielsweise kann man 40 bis 100 gew.-%ige, vorzugsweise 50 bis 85 gew.-%ige Zubereitungen von erfindungsgemäß einzusetzenden Aminsalzen saurer Phosphate verwenden.

Zusätzlich zu Aminoalkoholen können bei der Umsetzung mit Aluminiumphosphat auch Alkalien oder Erdalkalien eingesetzt werden. Vorzugsweise wird jedoch ohne solche Zusätze oder mit nur geringen Mengen solcher Zusätze gearbeitet, z.B. weniger als 10 Gew.-%, bezogen auf das Amin.

Wenn eine Verbundglaskonstruktion mit erfindungsgemäßen Zwischenschichten, die Wasser enthalten, beflammt wird, bekommt die flammenseitige Glasscheibe Risse. Im Bereich der Risse strömt Wasserdampf ab und kühlt die Verbundglaskonstruktion. Gleichzeitig werden solche Risse durch den im Zwischenschichtmaterial enthaltenen Feststoff verstopft, so daß kaum Materialverluste entstehen. Im Beflammungsverlauf trübt sich das Zwischenschichtmaterial zwischen den Glasscheiben, und es bildet sich auf der flammseitigen Glasscheibe eine Schicht aus Zwischenschichtmaterialpyrolysat, die den Strahlungsdurchtritt vermindert. Weiterhin beginnt das Zwischenschichtmaterial im Beflammungsbereich zu intumeszieren und bildet einen mineralisierten Schaum, der eine Isolation sowohl gegen Wärmedurchtritt als auch gegen Durchtritt sonstiger Strahlung darstellt. Fernerhin füllt der sich bildende Intumeszenzschaum eventuelle Materialverluste im Zwischenschichtbereich wieder isolierend aus, so daß eine Art Selbstheilungseffekt eintritt. Nach längerer Beflammung wird der in den Zersetzungsprodukten enthaltene Kohlenstoff verbrannt und es bildet sich flammenseitig eine weiße, thermisch beständige Mineralschicht aus, die Wärme und Strahlung in den Brandraum zurückreflektiert.

Die Gesamtheit dieser bei Beflammung ablaufenden Prozesse führt bereits bei einem Zweischeibenverbund, besonders aber bei einem Drei- oder Vierscheibenverbund, zu sehr gutem Brandwiderstandsverhalten der mit erfindungsgemäßen Zwischenschichten versehenen Verbundgläser. Beispielsweise lassen sich bei Fensterglas-Dreischeibenverbunden mit 3-5 mm Zwischenschichten Feuerwiderstandsklassierungen im Bereich von F 30 in Anlehnung an DIN 4102 erreichen.

Die Herstellung solcher Scheibenverbunde kann beispielsweise erfolgen, indem man die Vorstufe des erfindungsgemäßen Brandschutzgels fließfähig bei Temperaturen unter 30°C herstellt, diese gegebenenfalls filtriert und/oder entgast, dann zwischen die Scheiben eines vorfabrizierten Scheibenglasverbundes blasenfrei eingießt und bei beispielsweise 50 bis 120°C, vorzugsweise 60 bis 90°C, das fließfähige Vorprodukt zur Gelierung bringt. Ein dabei gegebenenfalls auftretender Schwund kann durch Nachdrücken von Gelbildnern kompensiert werden. Abschließend kann man die Einfüllöffnung beispielsweise mit einer Kittmasse verschließen.

Es ist auch möglich, den Gelbildner auf Glasplatten plan aufzugießen, gegebenenfalls zu trocknen und vor oder nach erfolgter Gelierung durch Zusammenfügen solcherart beschichteter Glasscheiben oder gegebenenfalls auch Kunststoffscheiben, z.B. aus Polymethylmethacrylat, Polyvinylchlorid, Polycarbonat, Celluloseester, aromatischen Polyestern oder Polyurethan, Schicht auf Schicht oder Glas auf Schicht den Verbund herzustellen, wobei gegebenenfalls auch bei 0 bis 120°C, vorzugsweise 15 bis 80°C, verpreßt werden kann. Bei Mitverwendung von Kunststoffscheiben werden diese vorteilhafterweise im Inneren des Verbundes angeordnet.

Die Herstellung der Gelbildner, die als fließfähige Vorprodukte bezeichnet werden können, kann vorzugsweise so erfolgen, daß man eine möglichst klare Lösung des Aluminiumphosphates mit gegebener Konzentration kontinuierlich oder chargenweise einem Mischaggregat zuführt, z.B. einem Rührkessel, einem Statikmischer oder einem kontinuierlich arbeitenden Mischkopf, wie er aus der Mehrkomponenten-Polyurethanchemie bekannt ist, und dort mit dem jeweiligen Aminoalkohol vermischt.

Die Reaktionskomponenten kommen vorzugsweise mit Raumtemperatur zum Einsatz. Beim Vermischen wird nach Beendigung der dabei erfolgten Umsetzung eine meist klare, durch die freiwerdende Reaktionswärme erwärmte Produktlösung erhalten. Diese wird vorzugsweise sofort anschließend auf Temperaturen unter 45°C, vorzugsweise unter 35°C, abgekühlt, wofür man beispielsweise einen Zeitraum von weniger als 60 Minuten, vorzugsweise von weniger als 20 Minuten, einhält. Die so erhaltenen Lösungen sind für mehr als 24 Stunden bei 5 bis 30°C fließfähig. Sie können in diesem Zustand gegebenenfalls mit Zusatzkomponenten vermischt und/oder gelagert und dann der Verwendung zugeführt werden.

Beispielsweise kann man derartige Gelbildner auch in mehr oder weniger offenzellige, z.B. weiche, flexible Schaumstoffe, etwa solche aus Viskose oder Polyurethanen, einimprägnieren und dann in diesen durch Temperung gelieren lassen. Solche Schaumstoffe behalten auch nach der Gelierung eine gute Flexibilität, sofern es sich um Weichschäume handelte. Sie können als brandabweisende Abdeckungen oder zum brandtechnischen Verschluß von Fugen, Hohlräumen oder Kabelschotts in Wänden Verwendung finden. Da der enthaltene Gelbildner oder das Gel einen hohen Anteil an intumeszenzfähigem, weitgehend anorganischem Material mit hoher Feuerwiderstandsfähigkeit hat, wird durch ein derartiges flexibles Verschlußmaterial bei guter Handhabbarkeit eine hohe Brandschutzwiderstandsfähigkeit der damit hergestellten Raumabschlüsse erzielt.

Desgleichen kann man z.B. textile Substrate, etwa Binden aus Baumwollgewebe oder Glasvliese oder auch Mineralwollgestricke durch Imprägnieren oder Beschichten mit den Gelbildnern oder Gelen ausrüsten. Solche Produkte können z.B. zum Schutz von Rohrleitungen, Kabeln oder Konstruktionsteilen gegen Brandeinwirkung oder als Dichtungsmaterial verwendet werden.

Wenn die Gelbildner oder die Gele wasserfrei oder weitgehend wasserfrei vorliegen, können sie bei Temperaturen zwischen beispielsweise 90 und 170°C, vorzugsweise zwischen 110 und 150°C, thermoplastisch zu Folien oder Formteilen verarbeitet werden, die dann ebenfalls als Verbundglaszwischenschichten oder für sonstige brandschutztechnische Zwecke verwendet werden können.

Im folgenden wird die Erfindung beispielhaft erläutert. Die angegebenen Teile und Prozente beziehen sich auf das Gewicht, sofern nichts anderes vermerkt ist.

### Beispiel 1

### a) Herstellung einer Phosphatlösung

Handelsübliches Aluminiumhydroxid (468 Teile) wurde in einem Gemisch aus entsalztem Wasser (247 Teile) und 85 %iger ortho-Phosphorsäure (2075 Teile) dispergiert. Unter Rühren wurde auf 130°C erhitzt (Heizbadtemperatur) bis nach 30 Minuten eine klare Lösung entstanden war. Diese hatte einen Feststoffgehalt von 80 %. Sie kann gegebenenfalls mit entsalztem Wasser auf niedrigere Konzentrationen verdünnt werden.

### b) Herstellung eines Gelbildners

100 Teile einer auf 50 % eingestellten Phosphatlösung (erhalten gemäß a)) wurden in einem Rührgefäß bei 22°C mit 27,8 Teilen Ethanolamin intensiv vermischt. Unter Erwärmung auf 70°C bildete sich eine klare Lösung. Diese wurde durch Wasserkühlung innerhalb von 18 Minuten auf 22°C abgekühlt. Es wurde eine bei 22°C mehr als 48 h leicht fließende klare Produktlösung mit einem pH-Wert von 6 erhalten.

### c) Herstellung eines Gels

100 Teile der 22°C warmen Lösung des Gelbildners (erhalten gemäß b)) wurden in die Zwischenräume eines vorfabrizierten Dreischeibenverbundglases aus Fensterglas blasenfrei eingefüllt. Die mit dem Gelbildner zu füllenden Zwischenräume hatten eine lichte Weite von 4,5 mm. Anschließend wurde die gefüllte Verbundglaskonstruktion in einem auf 70°C eingestellten Heizschrank 15 Stunden getempert. Dann wurde der Verbund dem Schrank entnommen und langsam abgekühlt. Der Verbund war klar durchsichtig und die Zwischenschichten geliert, d.h. nicht mehr fließfähig.

### d) Brandprüfung

Der gemäß c) erhaltene 3-Scheibenverbund wurde in einer Größe von 50 x 50 cm in das Prüffeld eines Kleinbrandofens eingebaut, der in Anlehnung an DIN 4102 betrieben und entsprechend der Einheitstemperaturkurve (ETK) aufgeheizt wurde. Bei einer Ausgangstemperatur von 34°C auf der flammenabgewandten Außenfläche des Verbundes wurde berührungslos über ein IR-Temperaturmeßgerät nach 31 Minuten eine Temperatur von 160°C gemessen. Nach 130 Minuten betrug die Temperatur 465°C. Die flammenabgewandte Glasscheibe zersprang nicht, der Verbund war optisch geschlossen und der Raumabschluß gewahrt. Nach dem Ausbau der Verbundkonstruktion zeigte sich, daß die flammenseitige Fläche in ein weißes keramisches Material überführt worden war.

### Beispiel 2

100 Teile 20 %ige Phosphatlösung, erhalten gemäß Beispiel 1a), wurden intensiv mit 12 Teilen Ethanolamin vermischt. Die erhaltene klare Lösung wurde auf 18°C abgekühlt. Sie blieb über 40 Stunden gut fließfähig. Mit der Lösung wurde, nachdem sie mit 15 % Glasflakes vermischt und im Vakuum entgast worden war, ein Glaszylinder mit 2,5 cm Durchmesser gefüllt, der anschließend 12 Stunden in einem Umluftschrank bei 80°C getempert wurde. Das Material in dem Zylinder erstarrte dabei zu einem Gel und floß nicht mehr aus dem Zylinder aus, wenn er auf den Kopf gestellt wurde.

### Beispiel 3

100 Teile 80 %ige Phosphatlösung, erhalten gemäß Beispiel 1a), wurden intensiv mit 43 Teilen Ethanolamin vermischt. Die erhaltene klare Lösung wurde auf 20°C abgekühlt. Sie blieb über 40 Stunden fließfähig. Mit dieser Lösung wurde ein Glaszylinder mit 2,5 cm Durchmesser gefüllt, der anschließend im Umluftschrank 12 Stunden bei 75°C getempert wurde. Das Material in dem Zylinder erstarrte dabei zu einem nicht mehr fließenden Gel.

### Beispiel 4

100 Teile einer 60 %igen Phosphatlösung, erhalten gemäß Beispiel 1a), wurden intensiv mit 35 Teilen Ethanolamin verrührt. Man erhielt eine gut fließende Lösung, die klar war und auf 20°C abgekühlt wurde. In diesem Zustand blieb die Lösung mehr als 48 Stunden fließfähig, der pH-Wert lag bei 6.

Die fließfähige Lösung wurde zur Imprägnierung eines Viskoseweichschaumstoff-Plattenmaterials mit hoher Flexibilität und einem Raumgewicht von 100 kg/m³ verwendet. In den Schaumstoff wurde soviel Material eingebracht, daß dessen Raumgewicht auf 700 kg/m³ anstieg. Dann wurde der Schaumstoff in eine eng anliegende Polyethylenhülle verpackt und 14 Stunden bei 70°C getempert. Anschließend war die Imprägnierungslösung zu einem Gel erstarrt und lief bei Handhabung und Biegung des Schaumstoffmaterials aus diesem nicht mehr aus. Aus dem nunmehr mit Gel imprägnierten Schaumstoff wurden Streifen mit einem Querschnitt von 3 x 3 cm geschnitten und in eine Prüfmauer mit einer Fuge von 2 cm Breite eingedrückt. Nach 50-tägigem Stehen bei Raumtemperatur in einer überdachten Halle wurde der Mauerfugen-Prüfkörper in einen Kleinbrand-Prüfofen eingebaut und in Anlehnung an DIN 4102 gemäß der ETK-Kurve beflammt. Nach 120 Minuten blieb in der Fuge der Raumabschluß bewahrt. Weder Flammen noch Brandgase traten aus der Fuge aus.

### Beispiel 5

100 Teile 50 %ige Phosphatlösung, erhalten gemäß Beispiel 1a), wurden mit 24 Teilen Diethanolamin intensiv vermischt. Die klare dünnflüssige Lösung wurde auf 20°C gekühlt. Sie blieb so über mehr als 40 Stunden fließfähig. Beim Tempern (15 Stunden, 80°C) ging sie in ein nicht mehr fließendes, weiches und klares Gel über.

### Beispiel 6

Eine Fensterglasscheibe wurde mit dem fließfähigen Umsetzungsprodukt mit Ethanolamin, erhalten gemäß Beispiel 3, 3 mm hoch beschichtet und in einem Umluftschrank bei 80°C bis zur Gewichtskonstanz getempert. Danach befand sich auf der Scheibe eine nahezu wasserfreie, klare und nicht mehr fließende Beschichtung. Dann wurde diese Glasscheibe mit einer zweiten, 3 mm dicken Scheibe aus feuerfestem Glas (Duran®) zu einem Zweischeibenverbund zusammengefügt, so daß die Beschichtung als Zwischenschicht vorlag.

In der Brandprüfung entsprechend Beispiel 1d) blieb mit dieser Konstruktion über 120 Minuten der Raumabschluß bestehen, nach 8 Minuten war die Scheibenkonstruktion, bei der die Fensterglasscheibe flammenseitig angeordnet war, undurchsichtig geworden, so daß der Durchtritt von Flammenstrahlung durch die Scheibe behindert wurde.

### Beispiel 7

4150 Teile 85 %ige ortho-Phosphorsäure wurden mit 490 Teilen Wasser und 936 Teilen Aluminiumhydroxid 1 Stunde bei Rückfluß gerührt. Es entstand eine klare Lösung des Salzes aus 3 Mol ortho-Phosphorsäure und 1 Mol Aluminiumhydroxid. Die Lösung war bei Raumtemperatur gut fließend.

In einem Edelstahlkessel mit Kühlvorrichtung wurden 5000 Teile der obigen 80 %igen Lösung bei Raumtemperatur vorgelegt. Unter gutem Rühren und gleichzeitiger Kühlung wurden 2400 Teile Ethanolamin so schnell zugegeben, daß die Reaktionstemperatur bei 80°C gehalten werden konnte. Die entstandene klare Lösung wurde dann im Verlaufe von 15 Minuten auf 35°C und schließlich auf Raumtemperatur abgekühlt. Man erhielt eine gut fließfähige klare Lösung, die auch noch nach 50 Stunden bei Raumtemperatur fließfähig war. Die so hergestellte 85 %ige Lösung wurde in vier gleiche Teile geteilt. Ein Teil blieb unverdünnt, je einer der anderen Teile der Lösung wurde auf 25, 50 und 75 % verdünnt. Diese vier Lösungen wurden jeweils in ein weites Reagenzglas mit 75 ml Fassungsvermögen eingefüllt, mit Aluminiumfolie verschlossen und für 12 Stunden in einen auf 80°C vorgeheizten Heizschrank eingestellt. Dabei gingen alle Lösungen vom fließfähigen in den auch bei 80°C stabilen Gelzustand über. Die konzentrierteren Gele waren klar durchsichtig, lediglich bei der 25 %igen Lösung war ein sehr schwach getrübtes Gel entstanden.

### Beispiel 8

In einen Dreischeibenverbund der Maße 50 x 50 cm mit Scheibenabständen von 3,5 mm wurde in die erste Zwischenschicht die wie in Beispiel 7 beschrieben erhaltene 75 %ige Lösung und in die zweite Zwischenschicht die 50 %ige Lösung eingegossen. Anschließend wurde der Verbund für 12 Stunden auf 70°C erwärmt, wobei die Zwischenschichten gelierten.

In der Ofenprüfung entsprechend Beispiel 1d), bei der das 50 %ige Gel flammenseitig eingebaut wurde, wurde die Feuerwiderstandsklasse F 30 (in Anlehnung an DIN 4102) erreicht.

### Beispiel 9

Eine 10 m und 10 cm breite Mullbinde, wie sie zur Herstellung von Gipsbinden üblich ist, wurde durch eine mit der 85 %igen Phosphatsalzlösung, erhalten gemäß Beispiel 7, beschickte Tränkvorrichtung geführt und zu einem Wickel aufgewickelt, der 300 g wog. Der Wickel wurde in einen Schrumpffolienschlauch gebracht, der Schlauch über dem Wickel verschlossen und durch Einschrumpfenlassen die Verpackung fixiert. Dann wurde die Imprägnierung des Wickels bei 80°C gelieren gelassen.

Nach 4 Wochen Lagerung bei Raumtemperatur wurde der gelierte Wickel der Verpackung entnommen. Die Binde wurde von dem Wickel abgewickelt, was trotz der gelierten Imprägnierung gut gelang. Das gelierte Tränkmaterial haftete auf dem Bindengewebe. Die abgewickelte Binde wurde nunmehr auf einer Länge von 25 cm um ein 2 cm dickes Polyvinylchlorid-Kabel einer Starkstromleitung fest gewickelt.

Dies gelang gut, denn das gelierte Material hatte eine gewisse Eigenklebrigkeit, die für einen guten Lagenverbund der Umwickelung sorgte und die Umwickelung auf dem Kabel festhielt.

Das Kabel wurde nun 3 Monate unter Innenraumbedingungen (20°C, 60 % relative Luftfeuchte) sich selbst überlassen, wobei sich die Umwickelung nicht merklich veränderte.

Danach wurde das Kabel so über einen Erdgasbreitbrenner montiert, daß dessen Flamme die Umwickelung voll erfaßte. Nach 30 Minuten Brennzeit war das Kabel noch voll funktionsfähig. Im Flammenbereich hatte sich die Umwickelung zu einem teilweise aufgeschäumten, teilweise keramisierten Schutzmantel verändert, unter dem sich der Kabelmantel nur wenig pyrolytisch verändert hatte.

Ein Kontrollversuch mit gleicher Brenneranordnung, jedoch einem entsprechenden, nicht-umwickelten Polyvinylchlorid-Kabel zeigte, daß dann der Kabelmantel nach 30 Minuten völlig zerstört und die Funktion des Kabels nicht mehr gewährleistet war.

## Patentansprüche

1. Brandschutzgele auf der Basis von Aminsalzen saurer Phosphate, dadurch gekennzeichnet, daß sie eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden, die bei Erhitzen auf Temperaturen über 45°C in weniger als 24 Stunden in ein durchsichtiges Gel übergeht.

2. Brandschutzgele nach Anspruch 1, dadurch gekennzeichnet, daß die Aluminiumkomponente Aluminiumhydroxid, die Phosphorkomponente ortho-Phosphorsäure und die Aminkomponente Anlagerungsprodukte von Epoxiden an Ammoniak, primäre und/oder sekundäre Mono- und/oder Polyamine sind.

3. Verfahren zur Herstellung von Brandschutzgelen auf der Basis von Aminsalzen saurer Phosphate, dadurch gekennzeichnet daß man aus einer Aluminiumverbindung und ortho-Phosphorsäure ein saures Aluminiumphosphat herstellt und dieses in 20 bis 85 gew.-%iger wäßriger Lösung mit einem Aminoalkohol umsetzt, wobei folgende Mengenverhältnisse eingehalten werden
- pro Mol Aluminiumverbindung 2 bis 4 Mol ortho-Phosphorsäure und
- pro 100 Gramm saures Aluminiumphosphat in 20 bis 85 gew.-%iger wäßriger Lösung 0,5 bis 1,5 Mole Aminoalkohol.

4. Verfahren nach Anspruch 3, dadurch gekennzeichnet, daß man, wenn man von einer 20 gew.-%igen wäßrigen Lösung eines Aluminium-tris-Phosphates ausgeht pro 100 Gew.-Teile Phosphat-Feststoff 45 bis 65 Gew.-Teile Ethanolamin einsetzt, wenn man von einer 80 gew.-%igen wäßrigen Lösung eines Aluminium-tris-Phosphates ausgeht 30 bis 70 Gew.-Teile Ethanolamin pro 100 Gew.-Teile Phosphat-Feststoff einsetzt und bei anderen Konzentrationen an Aluminium-tris-Phosphat-Lösungen Ethanolaminmengen einsetzt, die sich durch lineare Interpolation zwischen den obengenannten Eckdaten ergeben.

5. Verfahren nach Anspruch 3, dadurch gekennzeichnet, daß man als Aminoalkoholkomponente Anlagerungsprodukte von Epoxiden an Ammoniak, primäre und/oder sekundäre, aliphatische, aromatische und/oder araliphatische Mono- und/oder Polyamine, insbesondere Ethanolamine und davon insbesondere Mono-Ethanolamin einsetzt.

6. Verwendung von Brandschutzgelen gemäß Ansprüchen 1 und 2 und/oder hergestellt gemäß Ansprüchen 3 bis 5 zu Zwecken des vorbeugenden Brandschutzes.

7. Verwendung nach Anspruch 6, dadurch gekennzeichnet, daß man die Brandschutzgele in Zwischenschichten in Verbundglaskonstruktionen mit Brandschutzwirkung einsetzt.

8. Verwendung nach Anspruch 6, dadurch gekennzeichnet, daß man die Brandschutzgele als Tränkmittel und/oder Imprägnierung für harte und flexible Schaumstoffe oder textile Gebilde, als Füllung für Abdichtungsvorrichtungen, als Kabelfüllung, zur Herstellung von Brandschutzkitten, zur Beschichtung von Flächengebilden, als Hohlraumfüllung, als Mörtel, als Mörtelzusatz, als Komponente in textilen, brandschutzvermittelnden Bandagen oder als brandwidrige Klebemasse eingesetzt.

9. Brandschutzgele gemäß Ansprüchen 1 und 2 oder hergestellt gemäß Ansprüchen 3 bis 5, dadurch gekennzeichnet, daß vor der Gelierung, Füllstoffe, Farbgeber, Lichtschutzmittel, Radikalfänger, Substanzen mit speziellen Absorptionseigenschaften zur Erzielung von Filter- oder Verdunkelungseffekten im elektromagnetischem Spektrum, Metallpulver, Metallfasern, Metallflakes, Cellulose, Stärke, Zucker, Polyole, Fotochromiebildner, Nucleierungsmittel, Biocide und/oder Geruchstoffe in Mengen von insgesamt 0 bis 60 Gew.-% zugesetzt werden.

10. Verfahren zur Herstellung eines Scheibenverbundes, dadurch gekennzeichnet, daß man die Vorstufe eines Brandschutzgels gemäß Ansprüchen 1 und 2 oder hergestellt gemäß Ansprüchen 3 bis 5 fließfähig bei Temperaturen unter 30°C herstellt, diese gegebenenfalls filtriert und/oder entgast, dann zwischen die Scheiben eines vorfabrizierten Scheibenglasverbundes blasenfrei eingießt und bei 50 bis 120°C das fließfähige Vorprodukt zur Gelierung bringt oder den Gelbildner auf Glasplatten plan aufgießt und vor oder nach erfolgter Gelbildung durch Zusammenfügen solcherart beschichteter Glasscheiben oder Kunststoffscheiben Schicht auf Schicht oder Glas auf Schicht einen Verbund herstellt, den man gegebenenfalls bei 0 bis 120°C verpreßt.
